# EUROPÄISCHE PATENTANMELDUNG

(11) **EP 2 650 438 A2**
(43) Veröffentlichungstag der Anmeldung: **16.10.2013**
(21) Anmeldenummer: 13001790.8
(22) Anmeldetag: 08.04.2013
(51) Int. Cl.: E01C 19/48, E02F 9/16

(54) **Bedienstand für eine Straßenbaumaschine**

(30) Priorität: 12.04.2012 DE 202012003668 U
(71) Anmelder: Joseph Vögele AG, 67067 Ludwigshafen (DE)
(72) Erfinder: Herzberg, Ingo, 74918 Angelbachtal (DE); Gotterbarm, Tobias, 67117 Limburgerhof (DE)
(74) Vertreter: Grünecker, Kinkeldey, Stockmair & Schwanhäusser

(57) **Zusammenfassung**

Bedienstand (6) für eine Straßenbaumaschine (1), wobei der Bedienstand (6) eine Absturzsicherung (10) zum Verhindern des Absturzes eines Bedieners vom Bedienstand (6) aufweist, die eine Scheibe (14) aus Verbund-Sicherheitsglas aufweist.

## Beschreibung

Die Erfindung bezieht sich auf einen Bedienstand für eine Straßenbaumaschine, bei der es sich insbesondere um einen Straßenfertiger oder um einen Beschicker für einen Straßenfertiger handeln kann.

Straßenbaumaschinen verfügen üblicherweise über einen Bedienstand, auf dem sich Bedienelemente und meist auch ein Sitz für den Bediener der Maschine befinden. Bei vielen Straßenbaumaschinen befindet sich der Bedienstand vergleichsweise hoch über dem Boden, um Platz für Maschinenkomponenten zu bieten und dem Bediener einen weiten Überblick über die Baustelle zu verschaffen. Wegen der Höhe dieser Bedienstände ist jedoch eine Absturzsicherung zumindest an den Seiten des Bedienstands erforderlich, um zu verhindern, dass Bedienpersonal vom Bedienstand herabstürzen kann. Bei offenen, also nicht kabinenartig geschlossenen Bedienständen werden als Absturzsicherung durchgängig Geländer verwendet. Für Straßenfertiger ist dies beispielsweise aus der DE 200 13 638 U1 bekannt.

Die Aufgabe der Erfindung ist es, einen Bedienstand für eine Straßenbaumaschine zu verbessern.

Gelöst wird diese Aufgabe durch einen Bedienstand mit den Merkmalen des Anspruchs 1. Vorteilhafte Weiterbildungen der Erfindung sind in den Unteransprüchen angeführt.

Der erfindungsgemäße Bedienstand, bei dem es sich insbesondere um einen offenen (das heißt nicht kabinenartig geschlossenen) Bedienstand handeln kann, sieht vor, dass die Absturzsicherung eine Scheibe aus Verbund-Sicherheitsglas (VSG, englisch: laminated glass) aufweist. Dieses Verbund-Sicherheitsglas ist zwar vergleichsweise schwer, bietet jedoch den Vorteil, sehr stabil zu sein, kaum zu springen und nicht zu splittern. Auch nach einer teilweisen Zerstörung bietet das Verbund-Sicherheitsglas noch eine gewisse Schutzwirkung. Es ist deshalb ideal geeignet für die Anforderungen beim Betrieb einer Straßenbaumaschine, da es beispielsweise auch bei Steinschlag auf der Baustelle nicht brechen und splittern kann. Dies erhöht die Arbeitssicherheit beträchtlich. Gleichzeitig bietet die Scheibe aus Verbund-Sicherheitsglas dem Bediener im Vergleich zu einem herkömmlichen Geländer einen deutlich besseren Schutz vor Witterungseinflüssen wie Schnee oder Regen, und sie erlaubt ebenfalls im Vergleich zu einem Geländer einen deutlich weniger gestörten, freien Blick auf die Baustelle.

Vorzugsweise umfasst die Scheibe aus Verbund-Sicherheitsglas (VSG) zwei Scheiben aus Einscheiben-Sicherheitsglas (ESG) sowie mindestens eine zwischen den beiden Scheiben aus Einscheiben-Sicherheitsglas vorgesehene Folie. Bei dieser Folie kann es sich um eine Klebefolie handeln, beispielsweise aus Polyvinylbutyral (PVB), die die beiden Scheiben aus Einscheiben-Sicherheitsglas miteinander verklebt und diese Einzelscheiben bei ihrem Zersplittern weiterhin trägt und zusammenbindet.

Besonders günstig ist es, wenn die Scheibe aus Verbund-Sicherheitsglas an einzelnen Befestigungspunkten mit einer Struktur des Bedienstands verbunden ist, beispielsweise mit einem Geländer des Bedienstands. Durch die Lagerung lediglich an bestimmten Befestigungspunkten kann die Scheibe leicht montiert werden.

Die Bequemlichkeit für den Bediener der Straßenbaumaschine kann verbessert werden, wenn an der Absturzsicherung, insbesondere an der Scheibe aus Verbund-Sicherheitsglas, eine Armauflage montiert ist.

Eventuell für den Bediener der Straßenbaumaschine störende Lichteinflüsse, zum Beispiel Reflexionen von Pfützen auf der Baustelle, können verringert werden, wenn auf der Scheibe aus Verbund-Sicherheitsglas wenigstens abschnittsweise ein Aufdruck vorgesehen ist. Dieser Aufdruck kann in Form eines Siebdrucks auf die Scheibe aus Verbund-Sicherheitsglas und/oder auf die Folie zwischen zwei einzelnen Glasscheiben aufgebracht sein.

Die Erfindung bezieht sich auch auf eine Straßenbaumaschine mit einem Bedienstand der vorstehend beschriebenen Art, insbesondere auf einen Straßenfertiger oder einen Beschicker für einen Straßenfertiger.

Im Folgenden werden vorteilhafte Ausführungsbeispiele anhand einer Zeichnung näher erläutert. Im Einzelnen zeigen:
- Figur 1: ein Ausführungsbeispiel einer erfindungsgemäßen Straßenbaumaschine,
- Figur 2: die Absturzsicherung für den Bedienstand der Straßenbaumaschine und
- Figur 3: einen Querschnitt durch das untere Ende der Scheibe der Absturzsicherung.

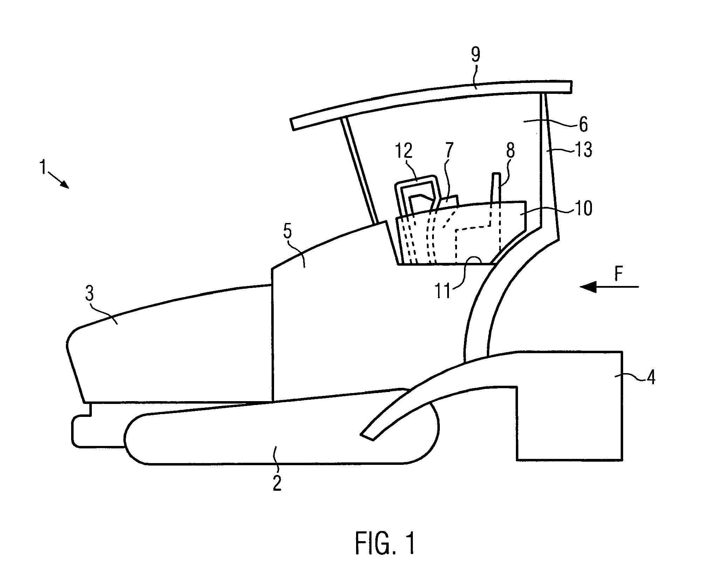

Figur 1 zeigt schematisch in Seitenansicht eine erfindungsgemäße Straßenbaumaschine 1, bei der es sich hier um einen Straßenfertiger 1 handelt. Dieser Straßenfertiger verfügt in üblicher Weise über ein Fahrwerk 2 (hier in Form eines Raupen-Fahrwerks), einen Gutbunker 3, eine vom Straßenfertiger 1 geschleppte Einbaubohle 4, einen Motorblock 5 und einen oberhalb des Motorblocks 5 angeordneten Bedienstand 6. Bei diesem Bedienstand 6 handelt es sich um einen offenen Bedienstand 6, der folglich nicht kabinenartig geschlossen ist. Er verfügt über ein Bedienpult 7 mit Bedienelementen zum Bedienen der Straßenbaumaschine 1, einen Sitz 8 für den Bediener und über ein Dach 9.

Sowohl auf der in Fahrtrichtung F der Straßenbaumaschine 1 linken, als auch auf der rechten Seite weist der Bedienstand 6 eine Absturzsicherung 10 auf. Diese Absturzsicherung 10 verhindert ein Abstürzen von Bedienpersonal vom Bedienstand 6. Sie erstreckt sich bis zu einer Höhe von maximal etwa 70 cm oder 80 cm über dem Boden 11 des Bedienstands 6. Als Struktur des Bedienstands 6 ist ferner ein Geländer 12 bzw. ein Geländerabschnitt vorgesehen, an dem eine Verbund-Sicherheitsglasscheibe 14 der Absturzsicherung 10 befestigt ist. Zusätzlich oder alternativ könnte die Verbund-Sicherheitsglasscheibe auch an anderen Strukturelementen wie beispielsweise einem Holm 13 zum Tragen des Daches 9 befestigt sein.

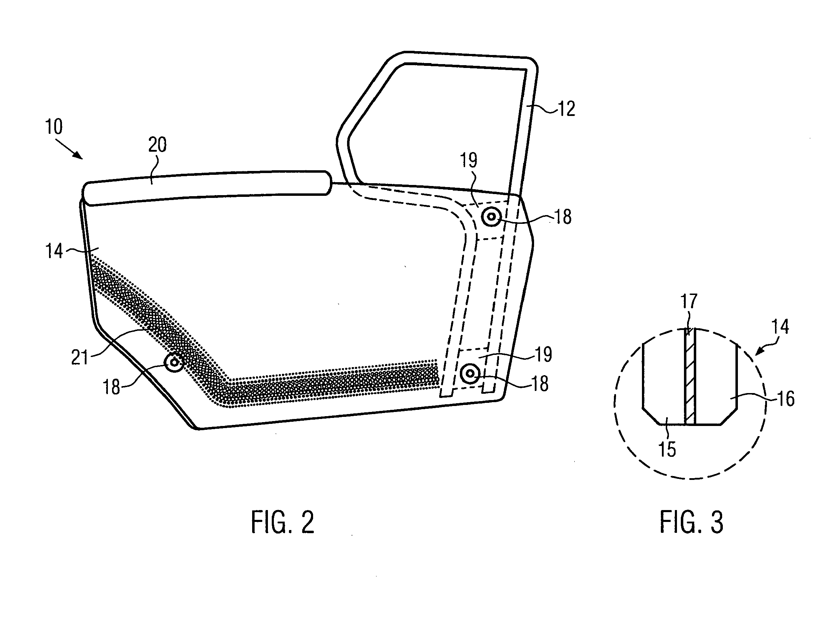

Figur 2 zeigt in Seitenansicht die Absturzsicherung 10 auf der in Fahrtrichtung F rechten Seite des Bedienstands 6. Die Absturzsicherung 10 verfügt über eine Scheibe 14 aus Verbund-Sicherheitsglas (VSG). Wie im Querschnitt am unteren Ende dieser Scheibe 14 in Figur 3 zu erkennen, weist die Verbund-Sicherheitsglasscheibe 14 zwei Scheiben 15, 16 aus Einscheiben-Sicherheitsglas (ESG) auf. Diese beiden Einscheiben-Sicherheitsglasscheiben 15, 16 sind über eine oder mehrere Folien 17 miteinander verbunden. Bei der Folie 17 kann es sich um eine Klebefolie insbesondere aus PVB handeln.

An drei Befestigungspunkten 18 ist die Scheibe 14 mit einer Struktur 12 des Bedienstands 6 verbunden, insbesondere mit einem Geländerabschnitt 12 des Bedienstands 6. Zwischen den Befestigungspunkten 18 und dem Geländerabschnitt 12 können Befestigungsschellen 19 vorgesehen sein.

An der oberen Kante der VSG-Scheibe 14 befindet sich ferner eine Armauflage 20. Sie verbessert den Komfort für den Bediener der Straßenbaumaschine 1, indem sie breiter ist als die obere Kante der VSG-Scheibe 14. Die Armauflage 20 kann zudem gepolstert sein.

Schließlich ist auf einem Abschnitt der VSG-Scheibe 14 auch ein Aufdruck 21 in Form eines Siebdrucks aufgebracht, um das Erscheinungsbild der Absturzsicherung zu verbessern, störende Lichteinflüsse zu verringern und das subjektive Sicherheitsempfinden des Bedieners im Vergleich zu einer völlig transparenten Glasscheibe zu verbessern.

## Patentansprüche

1. Bedienstand (6) für eine Straßenbaumaschine (1), wobei der Bedienstand (6) eine Absturzsicherung (10) zum Verhindern des Absturzes eines Bedieners vom Bedienstand (6) aufweist, **dadurch gekennzeichnet, dass** die Absturzsicherung (10) eine Scheibe (14) aus Verbund-Sicherheitsglas aufweist.

2. Bedienstand nach Anspruch 1, **dadurch gekennzeichnet, dass** die Scheibe (14) aus Verbund-Sicherheitsglas zwei Scheiben (15, 16) aus Einscheiben-Sicherheitsglas sowie mindestens eine Folie (17) zwischen den beiden Scheiben (15, 16) aus Einscheiben-Sicherheitsglas aufweist.

3. Bedienstand nach einem der vorangehenden Ansprüche, **dadurch gekennzeichnet, dass** die Scheibe (14) aus Verbund-Sicherheitsglas an Befestigungspunkten (18) mit einer Struktur (12, 13) des Bedienstands (6) verbunden ist.

4. Bedienstand nach einem der vorangehenden Ansprüche, **dadurch gekennzeichnet, dass** die Scheibe (14) aus Verbund-Sicherheitsglas an Befestigungspunkten (18) mit einem Geländer (12) des Bedienstands (6) verbunden ist.

5. Bedienstand nach einem der vorangehenden Ansprüche, **dadurch gekennzeichnet, dass** eine Armauflage (20) an der Absturzsicherung (10) montiert ist.

6. Bedienstand nach einem der vorangehenden Ansprüche, **dadurch gekennzeichnet, dass** ein Aufdruck (21) auf der Scheibe (14) aus Verbund-Sicherheitsglas vorgesehen ist.

7. Straßenbaumaschine (1) mit einem Bedienstand (6) nach einem der vorangehenden Ansprüche.

8. Straßenbaumaschine nach Anspruch 7, **dadurch gekennzeichnet, dass** die Stra-βenbaumaschine ein Straßenfertiger (1) oder ein Beschicker für einen Straßenfertiger (1) ist.
